(19) **Europäisches Patentamt / European Patent Office / Office européen des brevets**

(11) **EP 1 858 825 B1**

(12) **FASCICULE DE BREVET EUROPEEN**

(45) Date de publication et mention de la délivrance du brevet:
**21.07.2010 Bulletin 2010/29**

(21) Numéro de dépôt: **06726071.1**

(22) Date de dépôt: **10.03.2006**

(51) Int Cl.:
*C04B 35/12* (2006.01)    *C10J 3/74* (2006.01)

(86) Numéro de dépôt international:
**PCT/FR2006/000540**

(87) Numéro de publication internationale:
**WO 2006/097609 (21.09.2006 Gazette 2006/38)**

(54) **REVETEMENT INTERNE DE REACTEUR DE GAZEIFICATEUR**

INNENBESCHICHTUNG FÜR EINEN VERGASUNGSREAKTOR

INTERNAL COATING FOR A GASIFIER REACTOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.03.2005 FR 0502529**

(43) Date de publication de la demande:
**28.11.2007 Bulletin 2007/48**

(73) Titulaire: **Saint-Gobain Centre de Recherches et d'Etudes Européen**
**92400 Courbevoie (FR)**

(72) Inventeurs:
• **CHAMPION, Thibault Pierre Paul**
  **F-84460 Cheval Blanc (FR)**
• **HIS, Christian Claude**
  **F-84300 Cavaillon (FR)**
• **VILLERMAUX, Franceline Marguerite Louise**
  **F-84000 Avignon (FR)**

(74) Mandataire: **Sartorius, Jérome**
**Cabinet Nony et Associés**
**3, rue de Penthièvre**
**75008 Paris (FR)**

(56) Documents cités:
**EP-A- 0 404 610      US-A- 4 647 547**
**US-A- 5 106 795**

• **GUO ZONQI, ZHANG HUI: "Investigation and Application of Cr2O3-Al2O3-ZrO2 Refractories for Slagging Coal Gasifiers-" CHINA'S REFRACTORIES, vol. 6, no. 4, 1997, pages 18-22, XP009056408**
• **PATENT ABSTRACTS OF JAPAN vol. 018, no. 242 (C-1197), 10 mai 1994 (1994-05-10) -& JP 06 025723 A (KUROSAKI REFRACT CO LTD; others: 01), 1 février 1994 (1994-02-01)**

Remarques:
Le dossier contient des informations techniques présentées postérieurement au dépôt de la demande et ne figurant pas dans le présent fascicule.

**Description**

L'invention concerne un revêtement interne de réacteur de gazéificateur.

On connaît en particulier un gazéificateur utilisé pour gazéifier du charbon. Le procédé de gazéification du charbon connu depuis environ une cinquantaine d'années connaît actuellement un fort développement. Il permet en effet, à partir de matières hydrocarbonées très diverses, par exemple le charbon, le coke de pétrole, voire les huiles lourdes à recycler, de produire des gaz de synthèse servant d'une part de source d'énergie propre, et d'autre part de composés de base pour l'industrie chimique. Ce procédé permet en outre d'éliminer les composants indésirables, par exemple les NOx, le soufre ou le mercure, avant tout rejet dans l'atmosphère.

Le principe de la gazéification consiste en une combustion partielle contrôlée, sous pression et sous vapeur d'eau ou d'oxygène, à une température comprise entre 1000 et 1600°C environ.

Il existe différents types de réacteurs, appelés « gazéificateurs », à lit fixe, fluidisé ou entraîné. Ces réacteurs diffèrent par le mode d'introduction des réactifs, la manière dont est effectué le mélange comburant-combustible, les conditions de température et de pression et le procédé d'évacuation des cendres ou du laitier résidu liquide issu de la réaction.

L'article intitulé « Refractories for Gasification » paru dans la revue « Refractories Applications and News » Volume 8, Number 4, July-August 2003, écrit par Wade Taber du département Energy Systems de la Division Saint-Gobain Industrial Ceramics, décrit la structure d'un revêtement interne d'un gazéificateur. Ce gazéificateur est revêtu de différentes couches de produits réfractaires capables de résister aux conditions de température, de pression et d'environnement chimique auxquelles ils sont soumis pendant la gazéification. Les couches de produits réfractaires protègent ainsi la paroi métallique intérieure du gazéificateur de la chaleur et de la corrosion par les gaz et les laitiers.

Le produit réfractaire en face chaude est plus notamment soumis à l'érosion et l'attaque chimique par les cendres ou le laitier, ce qui conduit à l'infiltration des composés du laitier ou des cendres liquéfiées dans la porosité du produit réfractaire. Par suite de l'érosion et du cyclage thermique, cette infiltration peut provoquer un écaillage du revêtement, et finalement l'arrêt du réacteur.

Pour accroître la durée de vie des revêtements réfractaires, les chercheurs ont tenté d'augmenter son épaisseur. Cette solution présente cependant l'inconvénient de diminuer le volume utile du gazéificateur et donc son rendement.

James P. Bennett, dans l'article « Refractory liner used in slagging gasifiers » paru dans la revue Refractories Applications and News vol 9 number 5 septembre/octobre 2004 pages 20-25, explique que la durée de vie des revêtements réfractaires actuels des gazéificateurs, en particulier des systèmes refroidis par air, est très limitée malgré leur forte teneur en oxyde de chrome. Il mentionne notamment le rapport de SJ Clayton, GJ Stiegel et J.G Wimer « Gasification Technologies, Gasification Markets and Technologies - Present and Future, an Industry Perspective », US DOE report DOE IFE 0447 July 2002.

Il existe donc un besoin pour un revêtement réfractaire apte à résister plus efficacement et durablement que les produits connus à la corrosion rencontrée à l'intérieur des gazéificateurs.

Le but de l'invention est de satisfaire ce besoin.

Selon l'invention, on atteint ce but au moyen d'un revêtement réfractaire interne de gazéificateur présentant au moins une région en un matériau fritté comportant, en pourcentages en poids, au moins 45 % d'oxyde de chrome ($Cr_2O_3$) et au moins 1 %, de préférence au moins 2%, de préférence encore au moins 3%, d'oxyde de zirconium ($ZrO_2$), au moins 20 %, de préférence au moins 25 %, de préférence encore au moins 30 %, en poids dudit oxyde de zirconium ($ZrO_2$) étant stabilisé sous la forme cubique et/ou quadratique.

Comme on le verra plus en détail dans la suite de la description, de manière surprenante, la présence d'au moins 1 % d'oxyde de zirconium dont au moins 20 % en poids est stabilisé sous la forme cubique et/ou quadratique permet de réduire l'infiltration et l'attaque par les laitiers sans détériorer les autres propriétés fonctionnelles du revêtement.

De préférence, ledit matériau du revêtement selon l'invention présente encore une ou plusieurs des caractéristiques optionnelles suivantes :

- Au moins 60 % de l'oxyde de zirconium est stabilisé sous la forme cubique et/ou quadratique.
- Ledit matériau comporte au moins un dopant, agissant comme stabilisant de l'oxyde de zirconium ou pas, choisi parmi CaO, MgO, $Y_2O_3$ et $TiO_2$, le dopant préféré étant CaO. De préférence, la teneur en oxyde de calcium (CaO) dudit matériau est inférieure à 1,0% en poids. De préférence encore, le dopant agit, au moins en partie, comme stabilisant de l'oxyde de zirconium.
- La teneur en oxyde de zirconium ($ZrO_2$) est supérieure à 4,5 %, de préférence supérieure à 6 %, et/ou inférieure à 7 % en poids.
- La teneur en oxyde de chrome ($Cr_2O_3$) est supérieure à 60%, de préférence supérieure à 80 %, en pourcentages en poids.
- Ledit matériau comporte une teneur en oxyde d'aluminium ($Al_2O_3$) supérieure à 1%, de préférence supérieure à 2%, et/ou inférieure à 10%, de préférence inférieure à 5%, de préférence inférieure à 3,5% en pourcentages en poids.

- Ledit matériau comporte une teneur en silice supérieure à 0,5 %, de préférence à 1%, et/ou inférieure à 3%, de préférence à 1,5%, en pourcentages en poids.

- La somme des teneurs en oxydes de chrome ($Cr_2O_3$), de zirconium ($ZrO_2$), d'aluminium ($Al_2O_3$), de silicium ($SiO_2$) et oxyde de calcium (CaO) est supérieure à 95%, de préférence supérieure à 98%,en poids, les autres constituants du produit étant des impuretés. Les impuretés comprennent classiquement le fer sous forme essentiellement $Fe_2O_3$ et des oxydes de métaux alcalins tels que $Na_2O$ et $K_2O$. On considère que de telles teneurs en impuretés ne remettent pas en cause les avantages procurés par le matériau.

- La structure du matériau présente un granulat d'oxyde de chrome lié par une matrice comprenant des grains comportant de l'oxyde de zirconium et un dopant choisi parmi CaO, MgO, $Y_2O_3$ et $TiO_2$, le dopant agissant comme stabilisant de l'oxyde de zirconium ou pas, le pourcentage en poids de l'oxyde de zirconium contenu dans ces grains par rapport au poids du matériau étant supérieur à 1%, de préférence supérieur à 2,5%. De préférence, la teneur en dopant dans les grains comportant de l'oxyde de zirconium et un dopant est comprise entre 1 et 8% en poids par rapport au poids de ces grains. De préférence cette teneur en dopant est supérieure ou égale à 3 % et/ou inférieure ou égale à 6 %.

- De préférence le dopant est choisi parmi CaO, MgO et $Y_2O_3$, de préférence parmi MgO et CaO. Le dopant préféré est CaO.

- Le matériau se présente sous la forme d'une couche appliquée contre la paroi intérieure d'un réacteur du gazéificateur ou sous la forme d'un assemblage de blocs agencé pour protéger ladite paroi. De préférence toute la couche ou tous les blocs de l'assemblage sont constitués en un matériau tel que celui défini ci-dessus.

Dans la présente description, tous les pourcentages sont des pourcentages en poids, sauf mention contraire.

La composition des laitiers dans les gazéificateurs est typiquement constituée de $SiO_2$, FeO ou $Fe_2O_3$, CaO et d'$Al_2O_3$. Elle peut également comporter d'autres oxydes issus des produits d'alimentation du réacteur. L'indice de basicité $B = (CaO + MgO + Fe_2O_3) / (Al_2O_3 + SiO_2)$ est typiquement d'environ 0,6 et le rapport $C/S = CaO/SiO_2$ est typiquement de 0,4, les teneurs étant en pourcentages en poids.

Wang Zhe, dans l'article intitulé *« Application of ZrO_2 in high Cr_2O_3 low cement castable refractories for Refuse Melter »* publié dans le compte-rendu du congrès UNITEC 2003 8e biennal « worldwide conference refractories ECO refractory for the earth » du 19-22 octobre 2003 à Osaka (Japon), a étudié le comportement des produits à forte teneur en oxyde de chrome et d'aluminium, exempts d'oxyde de silicium, vis-à-vis de laitiers corrosifs rencontrés dans des fours d'incinération de déchets ménagers ou industriel. L'ajout de zircone fortement stabilisée sous forme cubique représentant entre 3,2 et 6,4 % de la composition totale est décrite comme défavorable à la résistance à la dissolution par les laitiers cités dans cette publication. Les laitiers des fours d'incinération sont cependant très différents de ceux des gazéificateurs car ils présentent les caractéristiques suivantes : indice B d'environ 1,2 ; rapport C/S d'environ 1,5.

Un revêtement doit être adapté aux conditions corrosives qu'il rencontre. On ne peut donc s'attendre à ce qu'un revêtement connu pour être résistant à certaines conditions corrosives le soit également lorsqu'il est soumis à d'autres conditions corrosives. Ainsi, on constate que les matériaux décrits comme inefficaces par Wang Zhe pour des fours d'incinération de déchets sont conformes à l'invention. De manière surprenante, les inventeurs ont découvert que ces matériaux sont efficaces dans une application à un revêtement de gazéificateur.

Dans des applications comme les fours de verrerie ou de l'industrie métallurgique, comme décrit par exemple dans le brevet EP 0 404 610, on connaît des produits constitués d'oxyde de zirconium et d'oxyde de chrome. Ces produits contiennent de l'oxyde de zirconium en proportion de 1 à 9% en poids par rapport à la composition totale. Selon ce brevet, il est essentiel qu'au moins 80% de l'oxyde de zirconium soit sous la forme monoclinique, la zircone monoclinique étant décrite comme « l'ingrédient-clé » pour améliorer la résistance aux chocs thermiques. De manière surprenante au regard de cet enseignement, les inventeurs ont découvert que, dans l'application à un revêtement de gazéificateur, la présence d'oxyde de zirconium stabilisé à hauteur d'au moins 20% était au contraire avantageuse.

L'oxyde de zirconium peut être stabilisé au moyen d'un dopant stabilisant et/ou par traitement thermique à très haute température (typiquement supérieure à 1700°C). Selon l'invention, au moins 20 % en poids de l'oxyde de zirconium est stabilisé sous la forme cubique et/ou quadratique.

De préférence, un dopant choisi parmi CaO, MgO, $Y_2O_3$ et $TiO_2$, agissant comme stabilisant ou pas, est présent dans le matériau du revêtement selon l'invention.

Le matériau du revêtement réfractaire selon l'invention est constitué d'un ou plusieurs granulat(s), c'est-à-dire de particules présentant une granulométrie supérieure à 150 $\mu$m, entouré(s) par une matrice liante.

Les granulats peuvent présenter des analyses chimiques diverses, en particulier être en oxyde de chrome, la teneur totale en oxyde de chrome du matériau étant d'au moins 45% en poids.

La matrice liante présente des grains, c'est-à-dire de particules présentant une granulométrie inférieure à 150 $\mu$m, comportant de l'oxyde de zirconium et un dopant. Selon l'invention, le seul oxyde de zirconium présent dans ces grains représente de préférence plus de 2,5% du poids total du matériau. Dans ces grains, le dopant peut avoir une fonction de stabilisant de l'oxyde de zirconium ou non. La matrice liante peut encore comprendre d'autres grains, notamment des grains d'oxyde de zirconium sans dopant.

Le revêtement selon l'invention peut être fabriqué sous la forme d'une couche, obtenue à partir d'un produit non façonné ou sous la forme d'un assemblage de blocs réfractaires.

Pour fabriquer un revêtement sous forme de couche, on prépare un mélange de base de particules d'oxyde de chrome et de zircone, et éventuellement d'autres oxydes dans des proportions déterminées en fonction de la composition du matériau désiré. Le dopant peut être ajouté dans le mélange et/ou être présent avec la zircone, comme stabilisant. Des additifs de mise en forme, de préférence en une proportion inférieure à 7%, peuvent être ajoutés pour faciliter la mise en oeuvre.

La façon de déterminer les proportions des constituants du mélange de base est parfaitement connue de l'homme du métier. En particulier, l'homme du métier sait que les oxydes de chrome, d'aluminium et de zirconium présents dans le mélange de base se retrouvent dans le matériau réfractaire fritté. Certains oxydes de ce matériau peuvent également être apportés par les additifs. La composition du mélange de base peut donc varier, notamment en fonction des quantités et de la nature des additifs présents.

L'oxyde de chrome peut être apporté sous forme d'un mélange de particules frittées ou fondues d'oxyde de chrome. L'oxyde d'aluminium peut être apporté sous forme d'un mélange de particules d'alumine calcinée ou réactive apportée, voire de corindon blanc. L'oxyde de zirconium peut être apporté sous forme de zircone non stabilisée disponible dans le commerce et/ou sous forme de zircone stabilisée, par exemple celle fournie par la société Unitec, sous forme de poudre.

On considère qu'une poudre est un ensemble de particules dont 90% en masse des particules ont une granulométrie inférieure à 150 $\mu$m.

De préférence, le mélange de base comporte au moins 0,2% en poids de poudre de zircone stabilisée.

De préférence, le mélange de base comporte

- au moins 60 % d'un mélange particulaire à base d'oxydes constitué à raison d'au moins 90% de son poids de particules ayant une granulométrie supérieure à 150 microns mais inférieure à 20mm ;

- moins de 40% d'un mélange particulaire, au moins 90% en poids des particules ayant une granulométrie inférieure à 150 $\mu$m ;

- moins de 7% d'un ou plusieurs additifs de mise en forme, bien connus de l'homme du métier.

Le mélange de base est de préférence homogénéisé et conditionné. Avantageusement, un tel mélange est prêt-à-l'emploi. Il peut être appliqué sur la paroi intérieure du réacteur, par exemple par coulage, vibrocoulage ou projection, en fonction des besoins et avec une grande souplesse, puis fritté *in situ* pendant la préchauffe du réacteur, de manière à réaliser un revêtement réfractaire selon l'invention. Le frittage a lieu à pression atmosphérique, sous atmosphère oxydante et à une température comprise entre 1300 et 1600°C.

Pour fabriquer un revêtement selon l'invention, il est également possible d'assembler des blocs frittés ou des blocs préfabriqués, qui seront alors frittés en service lors de la mise en chauffe du réacteur.

Pour fabriquer un bloc fritté, on peut mettre en oeuvre un procédé de fabrication comportant les étapes successives suivantes :

a) préparation d'une charge,
b) mise en forme de ladite charge dans un moule,
c) coulage de la dite charge dans le moule ou compaction par vibration et/ou pressage et/ou pilonnage de ladite charge à l'intérieur du moule de manière à former une préforme,
d) démoulage de la préforme,
e) séchage de ladite préforme, de préférence sous air ou atmosphère contrôlée en humidité, de préférence de manière que l'humidité résiduelle de la préforme reste comprise entre 0 et 0,5%,
f) cuisson de ladite préforme sous atmosphère oxydante à une température comprise entre 1300 à 1600°C de manière à former un produit réfractaire façonné, ou « bloc réfractaire » fritté.

Comme le mélange de base décrit ci-dessus, la charge comporte les oxydes déterminés en fonction de la composition finale du bloc ou des précurseurs de ceux-ci, et des additifs temporaires de mise en forme.

Les étapes a) à f) sont des étapes classiquement mises en oeuvre pour fabriquer des produits frittés.

A l'étape a), la façon de déterminer les quantités des constituants du produit réfractaire est parfaitement connue de l'homme du métier. En particulier, l'homme du métier sait que les oxydes de chrome, d'aluminium et de zirconium présents dans la charge de départ se retrouvent dans le produit réfractaire fabriqué. Certains oxydes peuvent également être apportés par les additifs. Pour une même quantité des constituants du produit réfractaire fritté, la composition de la charge de départ peut donc varier, notamment en fonction des quantités et de la nature des additifs présents dans cette charge.

Les additifs peuvent être ajoutés à la charge de départ pour lui assurer une plasticité suffisante pendant l'étape b) de mise en forme et pour conférer une résistance mécanique suffisante à la préforme obtenue en fin des étapes d) et e). Comme exemples d'additifs utilisables, on peut citer de façon non limitative :

- des liants temporaires (c'est-à-dire éliminés en tout ou en partie lors des étapes de séchage et de cuisson) organiques, tels que les résines, des dérivés de la cellulose ou de la lignone, des polyvinyle alcools ; De préférence, la quantité du liant temporaire est comprise entre 0,1 et 6 % en poids par rapport au poids du mélange particulaire de la charge.
- des agents de mise en forme tels que les stéarates de magnésium ou de calcium
- des liants hydrauliques tels que le ciment de type aluminate de CaO ;
- des défloculants tels que les polyphosphates alcalins ou des dérivés méthacrylates ;
- des promoteurs de frittage tels que le bioxyde de titane ou l'hydroxyde de magnésium.
- des ajouts de type argileux qui vont faciliter la mise en oeuvre et aider au frittage. Ces ajouts apportent de l'alumine et de la silice, et quelques oxydes de métaux alcalins ou alcalino terreux, voire de l'oxyde de fer, selon le type d'argile.

Les quantités d'additifs ne sont pas limitatives. En particulier, les quantités classiquement mises en oeuvre dans les procédés de frittage sont appropriées.

Le mélange des différents constituants de la charge est poursuivi jusqu'à obtention d'une masse sensiblement homogène.

A l'étape b), la charge est mise en forme et disposée dans un moule.

A l'étape c), dans le cas d'une mise en forme par pressage, une pression spécifique de 400 à 800 Kg/cm$^2$ est appropriée. Le pressage est de préférence effectué de manière uniaxiale ou isostatique, par exemple au moyen d'une presse hydraulique. Il peut être avantageusement précédé d'une opération de damage manuel ou pneumatique et/ou de vibration.

Le séchage de l'étape e) peut être effectué à une température modérément élevée. De préférence il est effectué à une température comprise entre 110 et 200°C. Il dure classiquement entre 10 heures et une semaine selon le format de la préforme, jusqu'à ce que l'humidité résiduelle de la préforme soit inférieure à 0,5 %.

La préforme séchée est alors mise à cuire (étape f)). La durée de la cuisson, comprise entre 3 et 15 jours environ de froid à froid, est variable en fonction des matériaux mais aussi de la taille et la forme des pièces. Le cycle de cuisson est de préférence effectué de manière classique, sous air, à une température comprise entre 1300°C et 1600°C.

De manière surprenante, le produit réfractaire façonné obtenu à l'issue de l'étape f) s'est avéré particulièrement résistant aux contraintes rencontrées à l'intérieur des réacteurs de gazéificateur, notamment à l'infiltration par les laitiers ou les cendres en fusion.

Pour fabriquer un bloc préfabriqué, on procède selon les étapes a) à e) ci-dessus, mais l'étape de cuisson f) est effectuée, au moins en partie, après assemblage des blocs dans le réacteur.

Les blocs sont assemblés au moyen de joints de dilatation appropriés, suivant des techniques bien connues de l'homme de l'art.

Les exemples qui vont suivre permettent d'illustrer, de façon non exhaustive, l'invention. Pour ces exemples, les matières premières suivantes ont été utilisées :

- mélange particulaire d'oxyde de chrome, d'une pureté de 98% de $Cr_2O_3$ en poids, et constitué d'au moins 90% en poids de particules ayant une grosseur supérieure à 20 microns mais inférieure à 20 mm,
- poudre d'oxyde de chrome pigmentaire (>98% de $Cr_2O_3$) dont le diamètre médian (D50) est inférieur à 2 microns,
- poudre d'alumine calcinée ou micronisée de diamètre médian de 5 microns,
- poudre de zircone monoclinique, commercialisée par la société ZIRPRO et présentant les caractéristiques indiquées dans le tableau 1 suivant (poudre P1),
- additifs : stéarates de magnésium ou de calcium, liants temporaires (dérivés de celluloses ou de lignone), liants chimiques (acide phosphorique, dérivés du monophosphate d'aluminium),
- poudre de zircone stabilisée fournie par la société UNITEC, dont les caractéristiques sont présentées dans le tableau 1 suivant (poudre P2),
- argile, d'une teneur >30% en alumine,

Tableau 1

| | P1 | P2 |
|---|---|---|
| D50 ($\mu$m) | 3,9 | 20,0 |
| ZrO$_2$+HfO$_2$ (% en poids) | 98,5 | 93,6 |
| CaO (% en poids) | 0,05 | 4,3 |
| Phases cristallines | Monoclinique (100%) | Monoclinique (33%), Cubique + tétragonale (67%) |

Dans une première étape a), les matières premières ont été mélangées et 3% d'eau ajouté. Ensuite, on a poursuivi le procédé par les étapes suivantes :

b) mise en forme de la charge dans un moule,
c) compaction de la charge à l'intérieur du moule à une pression de 600 Kg/cm$^2$ de manière à former une préforme,
d) démoulage de la préforme,
e) séchage de la préforme, sous air, de manière à obtenir une humidité résiduelle du matériau inférieure ou égale à 0,5%,
f) cuisson de ladite préforme sous atmosphère oxydante à une température comprise entre 1400 à 1600°C de manière à former un produit réfractaire façonné.

Les teneurs en oxyde d'aluminium, de chrome, de silicium et de calcium dans le produit final fritté ont été calculées à partir de la composition chimique des matières premières utilisées pour la charge de départ.
Les observations de la microstructure des produits de l'invention montrent qu'ils sont constitués d'un granulat d'oxyde de chrome entouré par une matrice liante qui contient, pour les produits 2 à 5, des grains de ZrO$_2$-CaO. Une analyse par microsonde permet de doser la teneur des éléments des grains de ZrO$_2$-CaO provenant de la poudre P1 ou P2.
Les mesures de masse volumique et de porosité ouverte ont été réalisées selon la norme ISO 5017 sur les produits avant toute corrosion.
Les autres mesures ont été effectuées sur des produits soumis, après l'étape f), à une corrosion représentative des conditions de service subies par la face chaude des revêtements de gazéificateurs. Cette corrosion a été obtenue de la manière suivante. Des éprouvettes de taille 25*25*180 mm$^3$ du produit à tester, placées dans une creuset d'un four sont plongées dans un laitier en fusion, à une température de 1600°C pendant 4 heures sous argon. Les éprouvettes sont mises en rotation à une vitesse de 2 tours/min.
Le laitier utilisé comportait notamment :

SiO$_2$ : environ 30- 50%
Al$_2$O$_3$ : environ 10 - 20 %
Fe$_2$O$_3$ ou FeO : 15 - 25 %
CaO : environ 10 -20 %

L'indice de basicité B de ce laitier, c'est-à-dire le rapport massique (CaO + MgO+Fe$_2$O$_3$)/(SiO$_2$+Al$_2$O$_3$) était typiquement de l'ordre de 0,6. Le rapport massique CaO/SiO$_2$ était de l'ordre de 0,4.
Les évaluations suivantes ont été effectuées : indicateur de corrosion, profondeur de pénétration de la CaO du laitier, déplétion de zircone, et valeur de module de rupture en flexion résiduel après une épreuve de choc thermique.
L'indicateur de corrosion est égal au rapport suivant :

$$100 * \frac{\text{perte de section de l'éprouvette du produit testé au point triple atmosphère --laitier,}}{\text{perte de section de l'éprouvette de référence au point triple atmosphère --laitier}}$$

la perte de section résultant de l'attaque corrosive par le laitier décrit ci-dessus et de la dissolution du produit réfractaire qui en résulte.
L'indicateur de corrosion est donc 100 pour le produit de référence et une valeur plus faible que 100 indique une meilleure résistance à la corrosion que le produit de référence.
La profondeur de pénétration de la CaO du laitier est mesurée grâce à une microsonde réalisée sur coupe métallographique.
La profondeur maximale pour laquelle la zircone constituant le réfractaire est attaquée et dissoute par le laitier est mesurée grâce à une microsonde. Cette profondeur est appelée « déplétion ».

Comme le revêtement selon invention peut subir en service des contraintes élevées suite à des chocs thermiques, les inventeurs ont aussi mesuré l'évolution du module de rupture en flexion de produits ayant subi un choc thermique.

La valeur de module de rupture en flexion résiduel après une épreuve de choc thermique a été évaluée selon la norme ISO 5014. Elle est notée « MOR résiduel » dans le tableau 2.

Le tableau 2 ci-dessous résume les résultats obtenus.

Tableau 2

| N° | 1 | 2 | 3 | 4 | 5 |
|---|---|---|---|---|---|
| Poudre de zircone de la charge (% en poids) | | | | | |
| P1 | 7 | 0 | 0 | 0 | 0 |
| P2 | 0 | 7 | 7 | 4,9 | 7,3 |
| Analyse chimique calculée du produit fritté (% en poids) | | | | | |
| $Cr_2O_3$ | 87 | 87 | 87 | 91 | 88 |
| $ZrO_2$ | 7,0 | 6,4 | 6,4 | 4,4 | 6,7 |
| $Al_2O_3$ | 2,8 | 2,8 | 3,3 | 2,3 | 1,7 |
| $SiO_2$ | 0,4 | 0,4 | 1,2 | 0,9 | 0,9 |
| CaO | <0,1 | 0,3 | 0,3 | 0,2 | 0,3 |
| Autres propriétés du produit fritté (avant corrosion) | | | | | |
| Masse volumique apparente ($g/cm^3$) | 4,25 | 4,24 | 4,30 | 4,20 | 4,23 |
| Porosité ouverte (%) | 15,2 | 14,5 | 12,1 | 13,3 | 12,7 |
| Mesures de l'infiltration du CaO et de la déplétion due à la corrosion | | | | | |
| Déplétion de $ZrO_2$ (mm) | 1,5 | 0 | 0 | 0,5 | 0,3 |
| Profondeur d'infiltration du CaO après test de corrosion (mm) | >10 | >10 | 3 | 5,4 | >10 |
| Mesure de la dissolution due à la corrosion | | | | | |
| Indicateur de corrosion | 100 | 96 | 67 | 77 | 85 |
| Résistance aux chocs thermiques | | | | | |
| MOR résiduel (Mpa) | 8,5 | 7 | 11 | 13 | 12 |

La composition n°1 est la composition de référence.

Le tableau 2 permet de tirer les enseignements suivants :

◦ L'ajout de zircone stabilisée contenant CaO (compositions 2-3-4-5-6) permet de réduire la déplétion de zircone, c'est à dire l'attaque de la zircone par le laitier.

◦ La présence d'oxyde de silicium à une teneur supérieure à 0,5% n'est pas néfaste à la résistance à la corrosion.

◦ La présence d'oxyde d'aluminium peut être favorable à la résistance à l'infiltration par l'oxyde de calcium comme le montre la comparaison des compositions 2 et 3.

◦ L'oxyde de calcium apporté notamment par la source de la zircone n'est pas particulièrement néfaste pour les propriétés recherchées.

◦ Les produits de l'invention présentent une meilleure résistance à la corrosion que le produit de référence.

◦ La composition 3 offre le meilleur compromis pour les propriétés recherchées et est préférée entre toutes.

Comme cela apparaît clairement à présent, le revêtement selon l'invention permet avantageusement de réduire l'infiltration et l'attaque par les laitiers rencontrés dans les réacteurs de gazéificateur, sans que ses autres propriétés fonctionnelles soient détériorées.

Bien entendu, la présente invention n'est pas limitée aux modes de réalisation décrits fournis à titre d'exemples illustratifs et non limitatifs.

## Revendications

1. Revêtement réfractaire interne de gazéificateur présentant au moins une région en un matériau fritté comportant, en pourcentages en poids, au moins 45 % d'oxyde de chrome ($Cr_2O_3$) et au moins 1 % d'oxyde de zirconium, au moins 20 % en poids dudit oxyde de zirconium ($ZrO_2$) étant stabilisé sous la forme cubique et/ou quadratique.

2. Revêtement réfractaire selon la revendication 1, **caractérisé en ce qu'**au moins 60 % de l'oxyde de zirconium est stabilisé sous la forme cubique et/ou quadratique.

3. Revêtement réfractaire selon l'une des revendications 1 ou 2, **caractérisé en ce qu'**il comporte au moins un dopant, agissant comme stabilisant de l'oxyde de zirconium ou pas, choisi parmi CaO, MgO, $Y_2O_3$ et $TiO_2$.

4. Revêtement réfractaire selon la revendication 3, **caractérisé en ce que** le dopant est CaO.

5. Revêtement selon la revendication 3, **caractérisé en ce que** le dopant est choisi parmi MgO et $TiO_2$.

6. Revêtement réfractaire selon l'une quelconque des revendications 3 à 5, dans lequel le dopant n'agit pas comme stabilisant de l'oxyde de zirconium.

7. Revêtement réfractaire selon l'une quelconques des revendications précédentes, **caractérisé en ce que** la teneur en oxyde de zirconium est supérieure à 6% en poids.

8. Revêtement réfractaire selon l'une quelconque des revendications précédentes, **caractérisé en ce que** la teneur en oxyde de zirconium ($ZrO_2$) est inférieure à 7 % en poids.

9. Revêtement réfractaire selon l'une quelconque des revendications précédentes, **caractérisé en ce que** la teneur en oxyde de chrome ($Cr_2O_3$) est supérieure à 80 % en poids.

10. Revêtement réfractaire selon l'une quelconque des revendications précédentes, **caractérisé en ce qu'**il comporte une teneur en oxyde d'aluminium ($Al_2O_3$) supérieure à 1% et/ou une teneur en silice supérieure à 0,5 %, en pourcentages en poids.

11. Revêtement réfractaire selon l'une quelconque des revendications précédentes, **caractérisé en ce qu'**il comporte une teneur en oxyde d'aluminium ($Al_2O_3$) inférieure à 10% et/ou une teneur en silice inférieure à 3%, en pourcentages en poids.

12. Revêtement réfractaire selon la revendication précédente, **caractérisé en ce qu'**il comporte une teneur en silice inférieure à 1,5%, en pourcentage en poids.

13. Revêtement réfractaire selon l'une quelconque des revendications précédentes, **caractérisé en ce que** la structure du matériau présente un granulat d'oxyde de chrome lié par une matrice comprenant des grains comportant de l'oxyde de zirconium et un dopant choisi parmi CaO, MgO, $Y_2O_3$ et $TiO_2$, le dopant agissant comme stabilisant de l'oxyde de zirconium ou pas, le pourcentage en poids de l'oxyde de zirconium contenu dans lesdits grains par rapport au poids du matériau étant supérieur à 2,5%.

14. Revêtement réfractaire selon la revendication précédente, **caractérisé en ce que** la teneur en dopant dans lesdits grains est comprise entre 1 et 8% en poids par rapport au poids desdits grains.

15. Revêtement réfractaire selon l'une quelconque des revendications précédentes, **caractérisé en ce que** le matériau se présente sous la forme d'une couche appliquée contre la paroi intérieure (26) d'un réacteur (14) du gazéificateur ou sous la forme d'un assemblage de blocs agencé pour protéger ladite paroi (26).

## Claims

1. A gasifier internal refractory lining having at least one region of a sintered material containing at least 45% by weight of chromium oxide ($Cr_2O_3$) and at least 1% by weight of zirconium oxide, at feast 20% by weight of said zirconium oxide ($ZrO_2$) being stabilized in the cubic and/or quadratic form.

2. The refractory lining according to claim 1, **characterized in that** at least 60% of said zirconium oxide is stabilized in the cubic and/or quadratic form.

3. The refractory lining according to any of claims 1 or 2, **characterized in that** it contains at least one dopant, stabilizing or not stabilizing the zirconium oxide, selected from CaO, MgO, $Y_2O_3$ and $TiO_2$.

4. The refractory lining according to claim 3, **characterized in that** said dopant is CaO.

5. The refractory lining according to claim 1, **characterized in that** said dopant is selected from MgO and $TiO_2$.

6. The refractory lining according to any of the claims 3 to 5, **characterized in that** said dopant does not stabilize the zirconium oxide.

7. The refractory lining according to any of the previous claims **characterized in that** the content of zirconium oxide ($ZrO_2$) is greater than 6% by weight.

8. The refractory lining according to any of the previous claims, **characterized in that** the content of zirconium oxide ($ZrO_2$) is less than 7% by weight.

9. The refractory lining according to any of the previous claims, **characterized in that** the content of chromium oxide ($Cr_2O_3$) is greater than 80% by weight.

10. The refractory lining according to any of the previous claims, **characterized in that** it has an aluminum oxide ($Al_2O_3$) content greater than 1% by weight and/or a silica content greater than 0.5% by weight.

11. The refractory lining according to any of the previous claims, **characterized in that** it has an aluminium oxide ($Al_2O_3$) content less than 10% by weight and/or silica content less than 3% by weight.

12. The refractory lining according to the previous claim, **characterized in that** it has a silica content less than 1.5% by weight.

13. The refractory lining according to any of the previous claims, **characterized in that** the structure of said material features a granulate of chromium oxide bound by a matrix comprising grains including zirconium oxide and a dopant selected from CaO, MgO, $Y_2O_3$ and $TiO_2$, said dopant stabilizing or not stabilizing said zirconium oxide, the percentage of zirconium oxide contained in said grains being greater than 2.5% by weight relative to the weight of said material.

14. The refractory lining according to the previous claim, **characterized in that** said dopant content in said grains is from 1% to 8% by weight relative to the weight of said grains.

15. The refractory lining according to any of the previous claims, **characterized in that** said material takes the form of a layer applied to the interior wall of a reactor of said gasifier or of an assembly of blocks arranged to protect said wall.

## Patentansprüche

1. Feuerfeste Innenbeschichtung für einen Vergasungsreaktor mit zumindest einer Region aus gesintertem Material, welches in Gewichtsprozent mindestens 45% Chromoxid ($Cr_2O_3$) und mindestens 1% Zirkoniumoxid aufweist, wobei mindestens 20 Gew.-% des besagten Zirkoniumoxids ($ZrO_2$) in kubischer und/oder quadratischer Form stabilisiert ist.

2. Feuerfeste Beschichtung nach Anspruch 1, **dadurch gekennzeichnet, dass** mindestens 60 % des Zirkoniumoxids in kubischer und/oder quadratischer Form stabilisiert ist.

**3.** Feuerfeste Beschichtung nach einem der Ansprüche 1 oder 2, **dadurch gekennzeichnet, dass** sie mindestens einen Dotierungsstoff aufweist, welcher als Stabilisator des Zirkoniumoxids agiert oder nicht und welcher aus CaO, MgO, $Y_2O_3$ und $TiO_2$ gewählt ist.

**4.** Feuerfeste Beschichtung nach Anspruch 3, **dadurch gekennzeichnet, dass** der Dotierungsstoff CaO ist.

**5.** Feuerfeste Beschichtung nach Anspruch 3, **dadurch gekennzeichnet, dass** der Dotierungsstoff aus MgO und $TiO_2$ gewählt ist.

**6.** Feuerfeste Beschichtung nach einem beliebigen der Ansprüche 3 bis 5, bei welcher der Dotierungsstoff nicht als Stabilisator des Zirkoniumoxids agiert.

**7.** Feuerfeste Beschichtung nach einem beliebigen der vorherigen Ansprüche, **dadurch gekennzeichnet, dass** der Gehalt an Zirkoniumoxid größer als 6 Gew.-% ist.

**8.** Feuerfeste Beschichtung nach einem beliebigen der vorherigen Ansprüche, **dadurch gekennzeichnet, dass** der Gehalt an Zirkoniumoxid ($ZrO_2$) kleiner als 7 Gew.-% ist.

**9.** Feuerfeste Beschichtung nach einem beliebigen der vorherigen Ansprüche, **dadurch gekennzeichnet, dass** der Gehalt an Chromoxid ($Cr_2O_3$) größer als 80 Gew.-% ist.

**10.** Feuerfeste Beschichtung nach einem beliebigen der vorherigen Ansprüche, **gekennzeichnet durch** einen Gehalt in Gewichtsprozent an Aluminiumoxid ($Al_2O_3$) größer als 1% und/oder einen Gehalt in Gewichtsprozent an Siliziumoxid größer als 0,5%.

**11.** Feuerfeste Beschichtung nach einem beliebigen der vorherigen Ansprüche, **gekennzeichnet durch** einen Gehalt in Gewichtsprozent an Aluminiumoxid ($Al_2O_3$) kleiner als 10% und/oder einen Gehalt in Gewichtsprozent an Siliziumoxid kleiner als 3%.

**12.** Feuerfeste Beschichtung nach einem beliebigen der vorherigen Ansprüche, **gekennzeichnet durch** einen Gehalt in Gewichtsprozent an Siliziumoxid kleiner als 1,5%.

**13.** Feuerfeste Beschichtung nach einem beliebigen der vorherigen Ansprüche, **dadurch gekennzeichnet, dass** die Materialstruktur ein Chromoxid-Granulat aufweist, welches über eine aus Körner aufweisende Matrix verbunden ist, welche Körner Zirkoniumoxid und einen aus CaO, MgO, $Y_2O_3$ und $TiO_2$ ausgewählten Dotierungsstoff aufweisen, welcher als Stabilisator des Zirkoniumoxids agiert oder nicht, und dass der Gewichtsprozentsatz des Zirkoniumoxids, welches die besagten Körnern aufweisen, im Verhältnis zu dem Gewicht des Materials größer als 2,5% ist.

**14.** Feuerfeste Beschichtung nach vorherigem Anspruch, **dadurch gekennzeichnet, dass** der Gehalt an Dotierungsstoff in besagten Körnern zwischen 1 und 8 Gew.-% im Verhältnis zu dem Gewicht der besagten Körner liegt.

**15.** Feuerfeste Beschichtung nach einem beliebigen der vorherigen Ansprüche, **dadurch gekennzeichnet, dass** das Material in Form einer auf eine Innenwand (26) eines Vergasungsreaktors (14) aufgebrachten Schicht, oder in Form eines zusammengesetzten Blockverbundes zum Schutz der besagten Innenwand (26), vorliegt.

## RÉFÉRENCES CITÉES DANS LA DESCRIPTION

**Documents brevets cités dans la description**

• EP 0404610 A

**Littérature non-brevet citée dans la description**

• **Wade Taber.** Refractories for Gasification. *Refractories Applications and News,* Juillet 2003, vol. 8 (4
• Refractory liner used in slagging gasifiers. *Refractories Applications and News,* Septembre 2004, vol. 9 (5), 20-25

• **SJ Clayton ; GJ Stiegel ; J.G Wimer.** Gasification Technologies, Gasification Markets and Technologies - Present and Future, an Industry Perspective. *US DOE report DOE IFE 0447,* Juillet 2002
• *worldwide conference refractories ECO refractory for the earth,* 19 Octobre 2003